# DEMANDE DE BREVET EUROPEEN

(11) **EP 2 860 421 A1**
(43) Date de publication de la demande: **15.04.2015**
(21) Numéro de dépôt: 14186044.5
(22) Date de dépôt: 23.09.2014
(51) Int. Cl.: F16D 23/12, F16D 28/00

(54) **Actionneur pour système de transmission**

(30) Priorité: 09.10.2013 FR 1359776
(71) Demandeur: Valeo Embrayages, 80009 Amiens Cedex 2 (FR)
(72) Inventeur: Maurel, Hervé, 80000 AMIENS (FR)
(74) Mandataire: Tran, Chi-Hai

(57) **Abrégé**

Actionneur (1) pour système de transmission, comprenant :
- un élément mobile (2) en translation selon un axe (X),
- un organe d'actionnement électrique (3), configuré pour déplacer l'élément mobile (2) le long de l'axe (X) au moins dans une direction prédéfinie (D),
- un organe d'assistance (10), exerçant une force dirigée transversalement (Y) à l'axe de déplacement (X) de l'élément mobile (2), et
-un organe de renvoi d'effort (8), coopérant avec l'organe d'assistance (10) et l'élément mobile (2) de manière à transformer la force exercée par ledit organe d'assistance (10) en une force parallèle à l'axe de déplacement (X) de l'élément mobile (2) et dirigée selon la direction prédéfinie (D),

l'organe d'assistance (10) étant configuré pour exercer sur l'organe de renvoi d'effort (8) une force faisant avec l'axe de déplacement (X) de l'élément mobile (2) un angle aigu (α) strictement inférieur à 90°.

## Description

La présente invention concerne un actionneur pour un système de transmission. L'invention s'applique notamment pour un véhicule, le système de transmission étant alors un système d'embrayage de ce véhicule. Il peut s'agir d'un embrayage simple, double, normalement ouvert ou normalement fermé. L'embrayage peut être un embrayage sec ou humide. Il peut s'agir d'un embrayage mono-disque ou multi-disque.

On connaît par exemple de la demande FR 2 933 461 un tel exemple d'actionneur. Cet actionneur comprend :
- un élément mobile en translation selon un axe, le déplacement de cet élément permettant de déplacer un diaphragme d'embrayage,
- un organe d'actionnement électrique, configuré pour déplacer l'élément mobile le long de l'axe au moins selon une direction prédéfinie,
- un organe d'assistance, exerçant une force dirigée perpendiculairement à l'axe, et
- une came, coopérant avec l'organe d'assistance via un galet d'interaction et l'élément mobile de manière à transformer la force exercée par ledit organe d'assistance en une force parallèle à l'axe et dirigée selon la direction prédéfinie. L'organe d'assistance est guidé en déplacement dans un logement par des galets de guidage coopérant avec une paroi de guidage.

La came selon FR 2 933 461 présente un profil comprenant une portion parallèle à l'axe de déplacement de l'élément mobile. Lorsque l'organe d'assistance coopère avec cette portion de la came, aucun effort n'est théoriquement transmis à l'élément mobile, de sorte qu'une position stable est obtenue pour l'actionneur. Cette position stable peut être utilisée en l'absence du système d'embrayage, par exemple lors du montage de ce dernier, ou en présence de ce système d'embrayage lorsque l'on souhaite que ce dernier reste dans un état de repos. La force de réaction exercée par la paroi de guidage sur les galets de guidage de l'organe d'assistance est également théoriquement nulle.

En réalité, du fait de l'existence de frottements dans le palier du galet d'interaction et de l'existence de déformations lors du contact entre ce galet et la came, cette force de réaction change de signe à chaque changement de sens du déplacement de la came. Le fait que la force de réaction puisse ainsi changer de signe pose plusieurs problèmes affectant l'efficacité et la durée de vie de l'actionneur. Parmi ces problèmes, on peut citer : l'existence d'un jeu dans la direction de l'axe de translation de l'élément mobile concernant le guidage du galet d'interaction et la nécessité de réduire ce jeu à l'aide d'une butée additionnelle, l'existence d'hystérésis concernant la position de la force exercée par l'organe d'assistance sur la came, la survenance de bruits lorsque la force de réaction s'inverse, et les chocs que cette inversion occasionne sur les galets de guidage.

L'invention vise à remédier à ces inconvénients d'une façon simple, efficace et peu coûteuse, et elle y parvient, selon l'un de ses aspects, à l'aide d'un actionneur pour un système de transmission, comprenant :
- un élément mobile en translation selon un axe,
- un organe d'actionnement électrique, configuré pour déplacer l'élément mobile le long de l'axe au moins dans une direction prédéfinie,
- un organe d'assistance, exerçant une force dirigée transversalement à l'axe de déplacement de l'élément mobile, et
- un organe de renvoi d'effort, coopérant avec l'organe d'assistance et l'élément mobile de manière à transformer la force exercée par ledit organe d'assistance en une force parallèle à l'axe de déplacement de l'élément mobile et dirigée selon la direction prédéfinie,
l'organe d'assistance étant configuré pour exercer sur l'organe de renvoi d'effort une force faisant avec l'axe de déplacement de l'élément mobile un angle aigu strictement inférieur à 90°.

Selon cet actionneur, la force exercée par l'organe d'assistance sur l'organe de renvoi fait avec l'axe de déplacement de l'élément mobile un angle aigu strictement inférieur à 90°. Ainsi, lorsque cet organe d'assistance coopère avec une zone plane de l'organe de renvoi et parallèle audit axe et lorsque le déplacement de cet organe d'assistance est guidé par un ou plusieurs galets de guidage, une force de contact non nulle est exercée sur ce galet de guidage. L'existence de cette force de contact non nulle permet d'éviter la génération de bruits lors de l'inversion du sens de déplacement de l'élément mobile. Les problèmes mentionnés ci-dessus peuvent être réduits, voire supprimés. Grâce à cette valeur d'angle aigu, la force de contact exercée par l'organe d'assistance sur l'organe de renvoi lorsque l'organe d'assistance coopère avec la zone plane de l'organe de renvoi est supérieure à la force nécessaire au déplacement selon son axe de translation de l'élément mobile.

L'organe d'actionnement électrique peut être mobile en rotation autour d'un axe sécant avec l'axe de déplacement de l'élément mobile, notamment autour d'un axe perpendiculaire à l'axe de déplacement de l'élément mobile.

L'organe d'assistance peut être mobile selon la direction de la force qu'il exerce sur l'organe de renvoi d'effort.

L'organe d'assistance peut comprendre au moins un galet d'interaction avec l'organe de renvoi d'effort. La force est alors exercée par l'organe d'assistance sur l'organe de renvoi d'effort par l'intermédiaire de ce ou ces galets d'interaction.

Le galet d'interaction peut présenter un palier lisse ou à roulements, par exemple un palier à roulements à billes ou à aiguilles.

L'organe d'assistance peut être reçu dans un logement, et l'organe d'assistance peut comprendre au moins un galet de guidage de l'organe d'assistance dans ledit logement. Ce guidage peut correspondre à un roulement du galet de guidage contre une paroi du logement ou contre une paroi rapportée dans ledit logement. Le logement peut présenter un axe faisant avec l'axe de déplacement de l'élément mobile l'angle aigu inférieur à 90°.

Le galet de guidage peut comprendre au moins un palier lisse, notamment deux paliers lisses.

Le galet de guidage et le galet d'interaction peuvent être mobiles en rotation autour d'un seul et même axe. Autrement dit, le galet de guidage et le galet d'interaction peuvent être coaxiaux. Par la suite, lorsque l'on se réfère aux galets, « radialement » s'apprécie par rapport à l'axe de rotation desdits galets. L'axe de rotation des galets peut être à la fois perpendiculaire à l'axe de déplacement de l'élément mobile et à l'axe du logement.

La fixation du galet de guidage et du galet d'interaction sur le reste de l'organe d'assistance peut se faire via un arbre s'étendant selon cet axe de rotation. Chacun des galets est alors monté sur cet arbre et relié au reste de l'organe d'assistance uniquement via cet arbre.

Le galet d'interaction s'étend par exemple de façon continue le long de l'axe de rotation entre deux faces d'extrémité perpendiculaires audit axe, et le galet de guidage peut comprendre deux parties s'étendant chacune en regard d'une des faces d'extrémités du galet d'interaction, et au-delà de cette dernière.

L'organe d'assistance comprend par exemple un unique galet d'assistance et un unique galet de guidage, et ces galets peuvent être coaxiaux.

Le galet d'interaction peut être plein. Autrement dit, lorsqu'observé depuis une direction parallèle à l'axe de rotation des galets, le galet d'interaction peut présenter une partie radialement extérieure s'étendant tout autour dudit axe de rotation, définissant par exemple un cercle

Le galet de guidage peut comprendre une partie radialement extérieure ne s'étendant circonférentiellement que sur un secteur angulaire limité. Autrement dit, lorsqu'observé depuis une direction parallèle à l'axe de rotation des galets, le galet de guidage peut présenter une partie radialement extérieure ne s'étendant que sur un secteur angulaire limité autour de l'axe de rotation. Un tel galet de guidage peut présenter un rayon extérieur plus élevé tout en restant compatible avec un encombrement réduit. En outre, un galet de guidage avec un rayon extérieur plus élevé peut permettre :
- de réduire la pression de contact lors du guidage dans le logement et,
- de réduire les pertes par frottement dans le palier du galet, du fait de la réduction de l'angle de rotation du galet.

Au sens de la présente demande, pour chacun du galet de guidage et du galet d'interaction, le rayon extérieur est celui mesuré entre l'axe de rotation et la surface radialement extérieure dudit galet.

Le galet d'interaction peut avoir un rayon extérieur inférieur à celui du galet de guidage. Le rapport entre le rayon extérieur du galet de guidage et le rayon extérieur du galet d'interaction peut être compris entre 1 et 5, par exemple entre 1 et 3. Le galet de guidage comprend par exemple :
- une partie radialement intérieure qui peut être pleine,
- une partie radialement extérieure ne s'étendant que sur un secteur angulaire limité, et
- un prolongement radial reliant les parties radialement intérieure et extérieure du galet de guidage.

L'organe d'assistance peut comprendre au moins un organe de rappel reçu dans une première portion du logement, et le galet de guidage peut être reçu dans une deuxième portion du logement.

La première portion du logement peut présenter un axe confondu avec l'axe selon lequel la force est exercée par l'organe de rappel.

Ce logement peut être formé par un boîtier qui peut être fixé mécaniquement sur le carter de l'organe d'actionnement électrique. L'organe de renvoi d'effort et/ou l'élément mobile peuvent être reçus dans ce même boîtier. Le boîtier définit par exemple un autre logement dont l'axe est l'axe de déplacement de l'élément mobile et cet autre logement peut communiquer avec le logement recevant l'organe d'assistance.

En variante, l'organe de renvoi d'effort et/ou l'élément mobile peuvent être reçus dans un boîtier distinct de celui formant le logement recevant l'organe d'assistance.

Selon un premier exemple de mise en oeuvre de l'invention, la deuxième portion du logement peut avoir la même section que la première portion du logement. La première portion présente par exemple une section transversale cylindrique et la deuxième portion présente par exemple une section transversale cylindrique de même rayon. Autrement dit, la deuxième portion peut constituer le prolongement vers l'organe de renvoi d'effort de la première portion. La première et la deuxième portion peuvent ainsi former un seul et même cylindre.

Dans ce cas, la réalisation du logement recevant l'organe d'assistance est simplifiée. On n'effectue par exemple qu'un seul alésage.

Selon ce premier exemple de mise en oeuvre de l'invention, une chemise peut être interposée entre le galet de guidage et la paroi de la deuxième portion du logement, et le guidage du galet de guidage peut se faire via la chemise. Une telle chemise est particulièrement appropriée lorsque le boîtier formant le logement est réalisé en un matériau peu compatible avec la pression de contact exercée par le galet de guidage sur ce boîtier.

Selon ce premier exemple de mise en oeuvre de l'invention, la surface radialement extérieure du galet de guidage, qui forme la surface de roulement dudit galet, peut être une portion de cylindre. L'axe de cette portion de cylindre peut être confondu avec l'axe de rotation du galet de guidage.

Selon un deuxième exemple de mise en oeuvre de l'invention, la deuxième portion peut avoir une section différente de celle de la première portion. La première et la deuxième portion ont par exemple une section transversale cylindrique mais le rayon de la section transversale de la deuxième portion est différent, notamment supérieur, au rayon de la section transversale de la première portion. Un déport peut ainsi être interposé entre la première et la deuxième portion.

Autrement dit, selon ce deuxième exemple de mise en oeuvre de l'invention, la première et la deuxième portion ne sont pas dans le prolongement l'une de l'autre. La section transversale de la deuxième portion peut présenter un rayon supérieur à celui de la section transversale de la première portion, de façon à pouvoir recevoir un galet de guidage de plus grande dimension radiale.

Selon ce deuxième exemple de mise en oeuvre de l'invention, la surface radialement extérieure du galet de guidage, qui forme la surface de roulement dudit galet, peut être une portion de sphère. La sphère peut présenter un centre appartenant à l'axe de rotation dudit galet.

Selon l'un ou l'autre des exemples de mise en oeuvre de l'invention, l'organe de renvoi d'effort peut être une came, cette came présentant de profil :
- au moins une partie plane parallèle à l'axe selon lequel se déplace l'élément mobile, et
- au moins une partie inclinée par rapport audit axe de déplacement de l'élément mobile.

Lorsque l'organe d'assistance coopère avec la partie plane de la came, aucun effort n'est transmis à l'élément mobile, de sorte que l'actionneur est dans un état par défaut. Lorsque l'organe d'assistance coopère avec la partie oblique de la came via le galet d'interaction, l'effort exercé par l'organe d'assistance est transmis à l'élément mobile. L'organe d'assistance peut alors assister l'organe d'actionnement électrique pour déplacer l'élément mobile selon la direction prédéfinie, par exemple pour activer le système de transmission. L'organe d'assistance peut en outre s'opposer à une force de rappel tendant à ramener le système de transmission vers son état par défaut, l'organe d'assistance permettant alors de réduire les efforts exercés sur les différentes pièces de l'actionneur.

L'organe d'assistance peut comprendre deux ressorts hélicoïdaux. Ces ressorts peuvent être de diamètre différent et être montés l'un dans l'autre.

L'organe d'entraînement électrique peut coopérer avec une crémaillère réalisée d'une seule pièce avec la came. En variante, la crémaillère peut être rigidement couplée avec la came mais être formée par une pièce distincte.

L'organe d'entraînement comprend un moteur électrique, par exemple un moteur à courant continu ou un moteur synchrone.

Dans tout ce qui précède, l'angle aigu peut être compris entre 70° et 85°. La valeur de cet angle peut être déterminée en fonction du frottement du palier du galet d'interposition.

En négligeant les déformations se produisant lors du contact entre le galet d'interaction et l'organe de renvoi, l'angle aigu α peut être choisi de manière à vérifier la relation sin (90°-α) > ra/R*µ où µ est le coefficient de frottement maximal du palier du galet d'interaction, ra le diamètre de ce palier, et R le diamètre extérieur du galet d'interaction.

L'angle aigu peut rester constant sur toute la plage de fonctionnement de l'actionneur.

L'invention a encore pour objet, selon un autre de ses aspects, un actionneur pour un système de transmission, comprenant :
- un élément mobile en translation selon un axe,
- un organe d'actionnement électrique, configuré pour déplacer l'élément mobile le long de l'axe au moins dans une direction prédéfinie,
- un organe d'assistance, exerçant une force dirigée transversalement à l'axe de déplacement de l'élément mobile, l'organe d'assistance comprenant un unique galet d'interaction, et un unique galet de roulement apte à guider le déplacement dudit organe d'assistance contre une paroi de guidage, et
- un organe de renvoi d'effort, coopérant avec le galet d'interaction et l'élément mobile de manière à transformer la force exercée par ledit organe d'assistance en une force parallèle à l'axe et dirigée selon la direction prédéfinie,
le galet d'interaction et le galet de guidage étant coaxiaux.

Tout ou partie des caractéristiques mentionnées ci-dessus s'appliquent à cet autre aspect de l'invention.

L'invention pourra être mieux comprise à la lecture de la description qui va suivre d'un exemple non limitatif de mise en oeuvre de celle-ci et à l'examen du dessin annexé sur lequel :
- la figure 1 représente de façon schématique un actionneur selon un premier exemple de mise en oeuvre de l'invention,
- les figures 2 et 3 représentent de façon schématique un actionneur selon un deuxième exemple de mise en oeuvre de l'invention, et
- la figure 4 représente de façon très schématique une variante d'un actionneur selon l'invention.

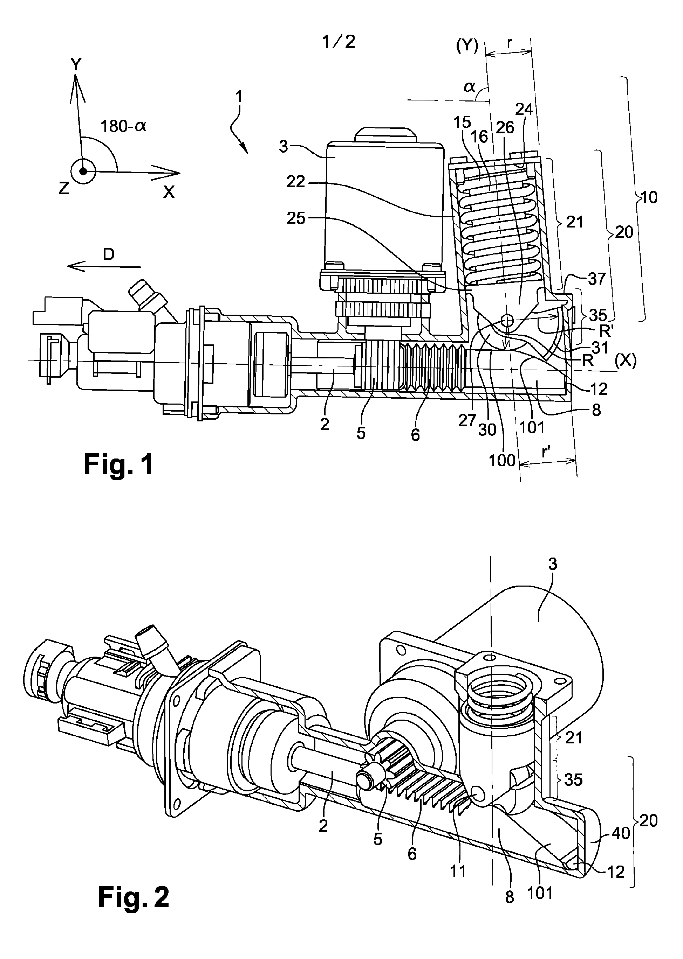

On a représenté sur la figure 1 un actionneur 1 selon un premier exemple de mise en oeuvre de l'invention.

Cet actionneur 1 permet de modifier l'état d'un système de transmission de véhicule automobile, par exemple un embrayage simple, double, normalement ouvert ou normalement fermé. L'actionneur 1 permet le passage du système de transmission d'un état par défaut à état activé. L'actionneur 1 s'oppose par exemple à la force exercée par un ressort visant à ramener ou maintenir le système de transmission dans l'état par défaut.

L'actionneur 1 comprend un élément 2 mobile en translation selon un axe X. L'élément 2 déplace par exemple un piston monté coulissant axialement dans un cylindre d'un vérin hydraulique commandant le déplacement d'une butée d'un embrayage, pour l'ouverture et la fermeture de cet embrayage.

L'actionneur 1 comprend encore dans l'exemple considéré un organe d'actionnement électrique 3, configuré pour déplacer l'élément mobile 2 le long de l'axe X selon une direction prédéfinie D, de manière à faire passer le système de transmission de l'état par défaut à l'état activé. Cet organe d'actionnement électrique 3 entraîne dans l'exemple considéré une roue dentée 5 coopérant avec une crémaillère 6 solidaire de l'élément mobile 2. L'organe d'actionnement électrique est dans l'exemple représenté mobile en rotation autour d'un axe perpendiculaire à l'axe X.

La crémaillère 6 est solidaire d'une came 8 formant un organe de renvoi de l'effort exercé par un organe d'assistance 10 qui sera décrit ultérieurement.

Dans l'exemple considéré, la came 8 présente un profil s'étendant entre deux extrémités 11 et 12, l'extrémité 12 venant en butée dans une position extrême de la came 8. Lorsque l'on se déplace de l'extrémité 11 la plus proche de la crémaillère 6 vers l'extrémité 12 la plus éloignée de cette dernière, le profil de la came 8 comprend successivement :
- une partie plane 100 parallèle audit axe X, et
- une partie oblique 101 par rapport audit axe X, et

L'organe d'assistance 10 coopère avec la came 8 pour exercer sur l'élément mobile 2 une force assistant la force exercée par l'organe d'actionnement électrique 3 pour favoriser le déplacement de l'élément mobile 2 afin de faire passer le système de transmission d'un état par défaut à un état activé.

L'organe d'assistance 10 comprend dans cet exemple deux ressorts hélicoïdaux coaxiaux 15 et 16, le ressort 16 présentant un diamètre supérieur à celui du ressort 15.

Ces ressorts 15 et 16 sont disposés autour d'un axe Y. Comme représenté sur la figure 1, l'axe Y s'étend transversalement à l'axe X, ménageant avec ce dernier un angle aigu α strictement inférieur à 90°. L'angle α est par exemple compris entre 70° et 85°.

L'actionneur 1 comprend également un boîtier formant un logement 20. Le logement 20 comprend une première portion 21 recevant dans l'exemple considéré les ressorts 15 et 16. Cette première portion 21 présente une partie latérale 22 s'étendant autour de l'axe Y et un fond 24 rapporté sur la partie latérale 22.

Chaque ressort 15 et 16 s'étend axialement entre le fond 24 et un support 26. Comme représenté sur la figure 1, le support 26 coopère via un rebord annulaire 25 avec la paroi de la première portion 21 du boîtier 20.

Le support 26 comprend en outre un logement dans lequel est inséré un arbre 27.

Comme représenté sur la figure 1, deux galets sont montés sur cet arbre 27. Un galet d'interaction 30 et un galet de guidage 31 sont montés sur l'arbre 27, ces galets 30 et 31 étant portés par cet arbre 27 et mobiles en rotation autour d'un axe Z défini par cet arbre 27. L'axe Z est ici à la fois perpendiculaire à l'axe X et à l'axe Y. Le galet d'interaction 30 s'étend dans l'exemple décrit de façon continue le long de l'axe Z entre deux faces d'extrémité perpendiculaires audit axe Z, et le galet d'interaction 30 comprend deux parties s'étendant chacune en regard d'une des faces d'extrémités du galet de guidage 31, et au-delà de cette dernière selon l'axe Z.

Le galet d'interaction 30 est ici plein, c'est-à-dire qu'il présente, lorsqu'observé selon une direction parallèle à l'axe Z un contour radialement extérieur s'étendant tout autour de l'axe Z. Ce contour radialement extérieur est ici circulaire.

Le galet d'interaction 30 est interposé entre la came 8 d'une part et le support 26 d'autre part. Le galet d'interaction exerce ainsi sur la came 8 la force générée par les ressorts 15 et 16. Lorsque le galet d'interaction 30 coopère avec la partie oblique 101 de la came 8, la force exercée par les ressorts 15 et 16 est convertie par la came 8 en une force dirigée selon l'axe X et tendant à déplacer l'élément mobile 2 selon la direction prédéfinie D en éloignement de l'organe d'assistance 10. Cette force peut alors :
- soit assister la force exercée par l'organe d'actionnement électrique 3 lorsque ce dernier est commandé pour amener le système de transmission de l'état par défaut dans l'état activé,
- soit s'opposer à une force de rappel tendant à ramener le système de transmission de l'état activé dans l'état par défaut.

Le galet de guidage 31 ne s'étend ici que sur un secteur angulaire limité, c'est-à-dire qu'il présente une partie radialement extérieure 32 qui ne s'étend, lorsqu'observée selon une direction parallèle à l'axe Z qu'autour d'une partie seulement de l'axe Z. Cette partie 32 est reliée par un prolongement radial 33 à une partie radialement intérieure 34 du galet de guidage 31 qui est pleine, similairement au galet d'interaction 30.

Comme représenté sur la figure 1, le galet de guidage 31 présente ici un rayon extérieur R' supérieur à celui R du galet d'interaction 30.

Dans l'exemple de la figure 1, le galet de guidage 31 coopère par sa partie radialement extérieure 32 avec la paroi d'une deuxième portion 35 du logement 20 qui a une forme différente de celle de la première portion 21.

La première portion 21 et la deuxième portion 35 sont ici deux cylindres ayant des rayons différents et des axes parallèles non confondus. Le rayon r' de la deuxième portion 35 est ici supérieur au rayon r de la première portion 21. Un déport 37 ménagé dans le boîtier formant le logement 20 correspond ici au passage de la première portion 21 à la deuxième portion 35.

L'extrémité 12 du profil de la came 8 vient dans cet exemple en regard de la paroi de la deuxième portion 35 du logement 20.

Comme représenté sur la figure 1, le galet 31 roule, via la surface de sa partie radialement extérieure 32, contre la paroi interne de la deuxième portion 35, de manière à guider la force exercée par les ressorts 15 et 16 selon l'axe Y. Dans l'exemple de la figure 1, la surface de roulement du galet de guidage 31 est une portion de cylindre dont l'axe est l'axe Z.

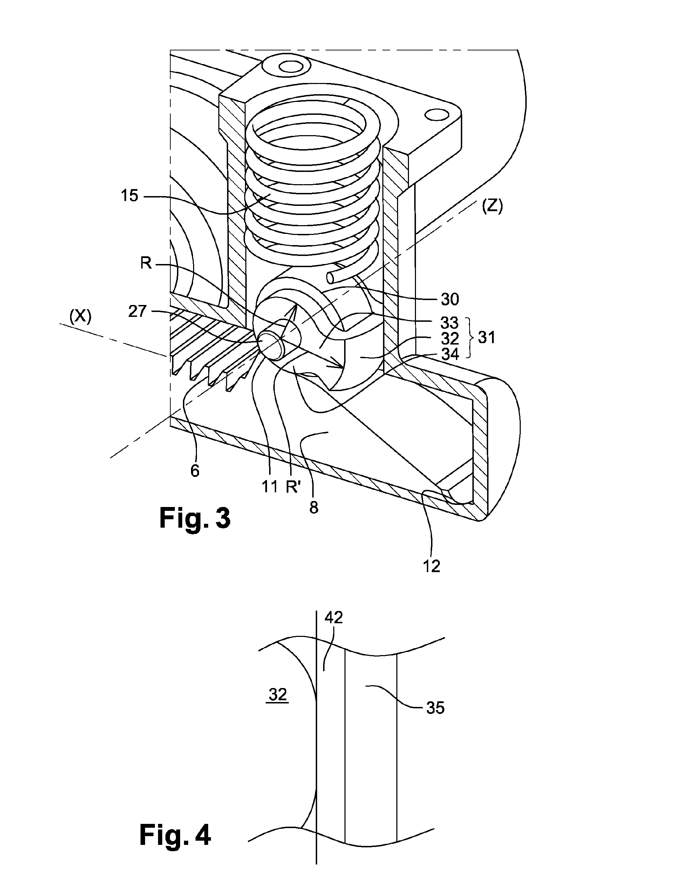

On va maintenant décrire en référence aux figures 2 à 4 un deuxième exemple de mise en oeuvre de l'invention. Sur la figure 3, le support 26 n'est pas représenté.

Ce deuxième exemple diffère de celui qui vient d'être décrit en référence à la figure 1 par la structure du logement 20 et par la structure du galet de guidage 31. En outre, dans cet exemple, l'organe d'assistance 10 ne comprend qu'un seul ressort

Comme représenté sur la figure 2, la première portion 21 et la deuxième portion 35 peuvent se situer dans le prolongement l'une de l'autre. Ces deux portions 21 et 35 sont ici des cylindres d'axe confondu qui est l'axe Y, et de même rayon. Dans cet exemple, l'extrémité 12 du profil de la came 8 ne vient pas en regard de la deuxième portion 35 mais d'une troisième portion 40 déportée par rapport aux première 21 et deuxième 31 portions.

Comme représenté sur les figures 2 et 3, le galet 31 roule, via la surface de sa partie radialement extérieure 32 contre la paroi interne de la deuxième portion 35 du boîtier 20, de manière à guider la force exercée par l'organe d'assistance 10 selon l'axe Y. Dans cet exemple la surface de roulement du galet de guidage 31, c'est-à-dire la surface de la partie radialement extérieure 32 de ce dernier, est une portion de sphère dont le centre appartient à l'axe Z.

Comme on peut le voir sur les figures 2 et 3, le galet de guidage 31 peut interagir directement avec la paroi de la deuxième portion 35 du logement 20, similairement à ce qui a été décrit en référence au premier exemple de mise en oeuvre de l'invention.

En variante, comme représenté sur la figure 4, une chemise 42 peut être interposée entre la partie radialement extérieure 32 du galet de guidage 31 et la paroi de la deuxième portion 35 du logement 20. Cette chemise 42 peut ne s'étendre que sur une partie du pourtour de l'axe Y et être réalisée dans un matériau lui permettant de résister à la pression de contact appliquée par le roulement du galet de guidage 31. La chemise 42 est rapportée sur la paroi de la deuxième portion 35 du logement 20.

En variante, la chemise 42 peut s'étendre sur tout le pourtour de l'axe Y.

En variante encore, la chemise 42 peut présenter une surface extérieure cylindrique et une surface intérieure avec un alésage pour guider le support 26 et une surface plane pour faire rouler un galet de guidage 31 cylindrique.

L'invention n'est pas limitée aux exemples de mise en oeuvre qui viennent d'être décrits.

## Revendications

1. Actionneur (1) pour système de transmission, comprenant :
- un élément mobile (2) en translation selon un axe (X),
- un organe d'actionnement électrique (3), configuré pour déplacer l'élément mobile (2) le long de l'axe (X) au moins dans une direction prédéfinie (D),
- un organe d'assistance (10), exerçant une force dirigée transversalement (Y) à l'axe de déplacement (X) de l'élément mobile (2), et
- un organe de renvoi d'effort (8), coopérant avec l'organe d'assistance (10) et l'élément mobile (2) de manière à transformer la force exercée par ledit organe d'assistance (10) en une force parallèle à l'axe de déplacement (X) de l'élément mobile (2) et dirigée selon la direction prédéfinie (D), l'organe de renvoi d'effort étant une came (8), cette came (8) présentant un profil ayant :
- au moins une partie plane (100) parallèle à l'axe de déplacement (X) de l'élément mobile (2), et
- au moins une partie inclinée (101) par rapport audit axe de déplacement (X) de l'élément mobile (2),
l'organe d'assistance (10) étant configuré pour exercer sur l'organe de renvoi d'effort (8) une force faisant avec l'axe de déplacement (X) de l'élément mobile (2) un angle aigu (α) strictement inférieur à 90°, cet angle aigu (α) restant constant sur toute la plage de fonctionnement de l'actionneur.

2. Actionneur selon la revendication 1, l'organe d'assistance (10) comprenant au moins un galet d'interaction (30) avec l'organe de renvoi d'effort (8), et l'organe d'assistance (10) comprenant au moins un galet de guidage (31) dans un logement (20).

3. Actionneur selon la revendication 2, le logement (20) présentant un axe (Y) faisant avec l'axe de déplacement (X) de l'élément mobile (2) l'angle aigu (α) inférieur à 90°.

4. Actionneur selon la revendication 3, ne comprenant qu'un seul galet d'interaction (30) et qu'un seul galet de guidage (31).

5. Actionneur selon la revendication 4, le galet d'interaction (30) et le galet de guidage (31) étant mobiles en rotation autour d'un seul et même axe (Z).

6. Actionneur selon la revendication 5, le galet d'interaction (30) présentant, lorsqu'observé depuis une direction parallèle à l'axe de rotation (Z), une partie radialement extérieure s'étendant tout autour dudit axe de rotation (Z) , et le galet de guidage (31) présentant, lorsqu'observé depuis ladite direction, une partie radialement extérieure (32) ne s'étendant que sur un secteur angulaire limité autour de l'axe de rotation (Z).

7. Actionneur selon la revendication 6, le galet d'interaction (30) ayant un rayon extérieur (R) inférieur à celui (R') du galet de guidage (31).

8. Actionneur selon les revendications 6 et 7, le galet de guidage (31) comprenant:
- une partie radialement intérieure (34), et
- un prolongement radial (33) reliant les parties radialement intérieure (34) et extérieure (32) du galet de guidage (31).

9. Actionneur selon l'une quelconque des revendications précédentes, l'organe d'assistance (10) comprenant au moins un organe de rappel (15, 16) reçu dans une première portion (21) d'un logement (20), et le galet de guidage (31) étant reçu dans une deuxième portion (35) du logement (20), la deuxième portion (35) du logement (20) ayant la même section que la première portion (21) dudit logement (20).

10. Actionneur selon la revendication 9, une chemise étant interposée entre le galet de guidage (31) et la paroi de la deuxième portion (35) du logement (20).

11. Actionneur selon l'une quelconque des revendications 1 à 8, l'organe d'assistance (10) comprenant au moins un organe de rappel (15, 16) reçu dans une première portion (21) d'un logement (20), et le galet de guidage (31) étant reçu dans une deuxième portion (35) du logement (20), la deuxième portion (35) du logement (20) ayant une section différente de celle de la première portion (21) dudit logement (20).

12. Actionneur selon l'une quelconque des revendications précédentes, la surface radialement extérieure du galet de guidage (31) étant une portion de cylindre.

13. Actionneur selon l'une quelconque des revendications 1 à 11, la surface radialement extérieure du galet de guidage (31) étant une portion de sphère.

14. Actionneur selon l'une quelconque des revendications précédentes, l'organe d'actionnement électrique (3) étant mobile en rotation autour d'un axe perpendiculaire à l'axe de déplacement (X) de l'élément mobile (2).

15. Actionneur selon l'une quelconque des revendications précédentes, l'angle aigu (α) étant compris entre 70° et 85°.
